(19) **Europäisches Patentamt / European Patent Office / Office européen des brevets**

(11) **EP 4 323 179 B1**

(12) **FASCICULE DE BREVET EUROPEEN**

(45) Date de publication et mention de la délivrance du brevet:
**10.09.2025  Bulletin 2025/37**

(21) Numéro de dépôt: **22720744.6**

(22) Date de dépôt: **08.04.2022**

(51) Classification Internationale des Brevets (IPC):
**B29C 70/24** *(2006.01)*    **B32B 3/14** *(2006.01)*
**B32B 3/18** *(2006.01)*

(52) Classification Coopérative des Brevets (CPC):
**B64D 29/00; B29C 70/24; B29C 70/30;
B29D 99/0007; B29D 99/0014; B32B 3/14;
B32B 3/18; B32B 5/26; B32B 7/09; B64C 7/02;
F01D 25/24;** B64C 2001/0072

(86) Numéro de dépôt international:
**PCT/FR2022/050661**

(87) Numéro de publication internationale:
**WO 2022/219271 (20.10.2022 Gazette 2022/42)**

(54) **RAIDISSEUR COURBE POUR NACELLE DE TURBOMACHINE ET MÉTHODE DE FABRICATION D'UN TEL RAIDISSEUR**

GEKRÜMMTE VERSTEIFUNG FÜR EINE TURBINENTRIEBWERKSGONDEL UND VERFAHREN ZUR HERSTELLUNG SOLCH EINER VERSTEIFUNG

CURVED STIFFENER FOR A TURBINE ENGINE NACELLE AND METHOD FOR PRODUCING SUCH A STIFFENER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **12.04.2021  FR 2103734**

(43) Date de publication de la demande:
**21.02.2024  Bulletin 2024/08**

(73) Titulaire: **Safran Nacelles
76700 Gonfreville-l'Orcher (FR)**

(72) Inventeurs:
• **PROVOST, Benjamin
77550 MOISSY-CRAMAYEL (FR)**
• **LORRILLARD, Julien
77550 MOISSY-CRAMAYEL (FR)**
• **DESJOYEAUX, Bertrand, Léon, Marie
77550 MOISSY-CRAMAYEL (FR)**
• **PARANT, Pierre
77550 MOISSY-CRAMAYEL (FR)**

(74) Mandataire: **Cabinet Beau de Loménie
103, rue de Grenelle
75340 Paris Cedex 07 (FR)**

(56) Documents cités:
**EP-A1- 2 774 854    FR-A1- 3 100 158
US-B1- 6 632 502**

EP 4 323 179 B1

## Description

Domaine Technique

La présente invention concerne un raidisseur courbe pour nacelle de turbomachine, en particulier un raidisseur courbe composé d'un renfort fibreux imprégné de résine. La présente invention concerne également le procédé de fabrication d'un tel raidisseur.

Technique antérieure

Les nacelles sont généralement prévues pour abriter un turboréacteur double flux apte à générer, d'une part, un flux de gaz chauds (également appelé flux primaire) issu du générateur de gaz du turboréacteur, et, d'autre part, un flux d'air froid (dit flux secondaire) issu de la soufflante et circulant à l'extérieur du turboréacteur, à travers un passage annulaire généralement dénommé veine secondaire. Les deux flux sont éjectés du turboréacteur par l'arrière de la nacelle.

Afin de maintenir la structure de la nacelle, un ou plusieurs raidisseurs courbes, généralement circonférentiels, peuvent être prévus pour renforcer la structure de cette dernière. Des raidisseurs composites comprenant des renforts fibreux multi-orientés, et composé d'un certain nombre de couches de fibres unidirectionnelles, assemblés par une couture dans l'épaisseur, appelés NCF conformément au signe anglais pour « Non-Crimp-Fabric » sont connus. Ce type de renfort comprend une pluralité de couches de fibres parallèles, et chaque couche de fibres présente des fibres orientées selon une orientation différente des orientations des fibres des couches de fibres qui lui sont immédiatement voisines. Ce type de raidisseur est obtenu en cousant la pluralité de couches de fibres entre elles a plat, en drapant ce renfort sur un moule de raidisseur, puis en l'imprégnant de résine, puis en réticulant la résine imprégnée dans les fibres. Un exemple est divulgué dans la demande de brevet EP 2 774 854.

Cependant, ce type de raidisseur ne peut pas comprendre de couche de fibres orientées selon la direction de la longueur du raidisseur. En effet, la courbure du raidisseur génère une longueur différente entre la tête du raidisseur et ses pieds, or les fibres généralement utilisées dans la confection de de raidisseur composite n'ont pas une capacité d'allongement suffisante pour résorber cette différence. La présence d'une couche de fibres selon la direction de longueur du raidisseur engendre donc des défauts lors du drapage du renfort fibreux sur le moule de raidisseur en forme, par exemple l'apparition de plissures dans les couches de fibres.

Il en résulte que la résistance de tels raidisseurs est moindre. En effet, l'impact des ondulations sur la tenue structurale du raidisseur est un point d'intérêt particulier.

Il existe donc un réel besoin de renfort textile adapté aux besoins de tenue mécanique du raidisseur ainsi qu'aux méthodes de formage, et capable de surmonter les défauts précités.

Exposé de l'invention

Le présent exposé concerne un raidisseur courbe pour capot de turbomachine composé d'un renfort fibreux imprégné de résine, le raidisseur comprenant une tête en forme de portion d'anneau, deux pieds en forme de portion d'anneau concentrique avec la tête et présentant un rayon plus grand qu'un rayon de la tête, et deux portions inclinées, chacune reliant l'un des pieds à un côté latéral de la tête, le renfort fibreux s'étendant selon une direction de longueur, une direction de largeur, et une direction d'épaisseur, la dimension du renfort fibreux selon la direction de longueur étant plus grande que la dimension du renfort fibreux selon la direction de largeur, et la dimension du renfort fibreux selon la direction de l'épaisseur étant la plus petite des dimensions du renfort fibreux, le renfort fibreux présentant une portion centrale configurée pour former la tête, deux portions d'extrémités disposées de part et d'autre de la portion centrale et configurées pour former les pieds, deux portions de liaison reliant la portion centrale aux portions d'extrémités et configurées pour former les portions inclinées, le renfort fibreux comprenant un empilement d'une pluralité de couches de fibres empilées selon la direction d'épaisseur et s'étendant sur l'intégralité de la largeur du renfort fibreux , chaque couche de fibres présentant une pluralité de fibres parallèles entre elles s'étendant selon une direction inclinée par rapport à la direction de longueur, les fibres de deux couches de fibres consécutives selon la direction d'épaisseur présentent des directions inclinées l'une par rapport à l'autre, et les couches de fibres sont cousues entre elles par des fils de couture s'étendant selon la direction de longueur, et dans lequel le renfort fibreux comprend une couche de fibres de renfort cousue avec les couches de fibres par les fils de couture présentant une pluralité de fibres parallèles entre elles s'étendant selon la direction de longueur, la couche de fibres de renfort s'étendant au moins sur la partie centrale, sur une largeur plus petite que la largeur du renfort fibreux.

Dans le présent exposé, on comprend que la dimension du renfort fibreux selon la direction d'épaisseur est très largement inférieure à la dimension du renfort fibreux selon les directions de longueur et de largeur.

Dans certains exemples non limitatifs, lorsque le raidisseur est placé dans une nacelle de turbomachine la direction d'épaisseur correspond à la direction de rayon, la direction de longueur correspond à la direction circonférentielle de la nacelle et la direction de largeur correspond à la direction axiale nacelle. Dans ces exemples, on comprend que la tête en forme de portion d'anneau est concentrique avec les deux pieds en forme de portion d'anneau, dans un plan donné perpendiculaire à la direction axiale de la nacelle et passant par le raidisseur, et le rayon de la tête est inférieur au rayon des pieds. Cependant, d'autres configurations peuvent être envisagées, dans lesquelles la direction de longueur correspondrait par exemple à la direction axiale ou une direction intermédiaire entre la direction axiale et la direction circonférentielle lorsque le raidisseur est placé dans une nacelle. Par ailleurs, le raidisseur de la présente invention pourrait être employé dans des pièces autres que des nacelles de turbomachine.

Un tel raidisseur incluant une couche de fibre de renfort orientée dans la direction de longueur (en d'autres termes, dans le sens 0 degré par rapport à la direction de longueur) voit sa résistance et sa raideur augmenter. En effet, la présence de fibre de renfort permet de mieux supporter les contraintes que pourrait subir le raidisseur, tout particulièrement lorsque cette couche est située au niveau de la tête du raidisseur. Par exemple un tel raidisseur rend la nacelle apte à reprendre plus aisément des contraintes de compression et de traction selon la direction de rayon.

Par ailleurs, la configuration de ce mode de réalisation permet d'inclure une couche de fibres de renfort dans le sens de la longueur du renfort fibreux, et donc du raidisseur, sans que des défauts n'apparaissent lors du drapage. Cet aspect est garanti par le fait que la couche de fibres de renfort s'étend sur une largeur inférieure à la largeur du raidisseur.

Cette solution permet d'obtenir un raidisseur avec de bonnes performances et le renfort fibreux d'un tel raidisseur peut être drapé intégralement en une seule étape de drapage. En effet, la couche de fibre de renfort peut être cousue avec les autres couches de fibres en une seule étape de couture. Il apparait donc qu'aucune étape de retouche du renfort fibreux, qui pourrait être prévue avant ou après le drapage, n'est nécessaire pour obtenir un raidisseur fonctionnel.

Dans certains modes de réalisation, la couche de fibres de renfort s'étend sur une partie des portions de liaison.

Dans cette configuration, les fibres de la couche de fibres de renfort dépassant sur les portions de liaison vont faciliter le centrage du renfort fibreux lors du drapage du renfort fibreux sur le moule de raidisseur. En effet, une fois disposées sur le moule, ces fibres dépassant sur les portions de liaison vont présenter une tension légèrement supérieure aux fibres disposées sur la portion centrale. De cette façon, le renfort fibreux sera incité à se placer de manière à répartir de façon homogène les fibres dépassant sur les portions de liaison de part et d'autre de la portion centrale. Le renfort fibreux est donc plus facilement centré sur le moule de raidisseur.

Dans certains modes de réalisation, la couche de fibres de renfort est disposée sur la pluralité de couche de fibres à une extrémité du renfort fibreux selon la direction d'épaisseur.

Dans cette configuration, la fabrication du renfort fibreux est facilitée.

Dans certains modes de réalisation, le raidisseur comprend au moins une couche de fibres de renfort additionnelle disposée dans l'empilement des couches de fibres.

Dans cette configuration, la raideur du raidisseur est augmentée. On peut alors contrôler la raideur du raidisseur en fonction du nombre de couches de fibres de renfort additionnelles incluses dans l'empilement des couches de fibres.

Dans certains modes de réalisation, le raidisseur comprend des coutures chainette disposées aux extrémités du renfort fibreux selon la direction de largeur.

Dans cette configuration, la découpe du renfort fibreux disposé sur le moule de raidisseur est facilitée.

Dans certains modes de réalisation, les couches de fibres et les couches de fibres de renfort sont cousues entre elles par des coutures de type tricot.

L'utilisation de couture tricot favorise la déformabilité du renfort fibreux.

Dans certains modes de réalisation, la tension des fils de couture est plus faible dans les portions de liaison que la tension des fils de couture dans la portion centrale.

Dans cette configuration, les portions de liaison du renfort fibreux sont aptes à subir des déformations plus importantes que la partie centrale du renfort fibreux. En particulier, cette configuration facilite le drapage du renfort fibreux tout en limitant les défauts qui pourraient apparaitre lors du drapage.

Dans certains modes de réalisation, la répartition des points de coutures dans la portion centrale est plus dense que la répartition des points de coutures dans les portions de liaison.

Dans cette configuration, la couche de fibres de renfort est cousue avec autres couches de fibres de façon plus robuste, ce qui aide à la stabilité du renfort fibreux.

Dans certains modes de réalisation, les fils de couture cousus sur les portions d'extrémité et les portions de liaison présentent une sur-longueur.

Dans cette configuration, la sur-longueur des fils de couture permet une déformation plus facile des portions d'extrémité et des portions de liaison. Le drapage du renfort fibreux sur le moule de raidisseur est donc facilité.

Le présent exposé concerne par ailleurs une nacelle comprenant un raidisseur tel que défini précédemment.

Le présent exposé concerne par ailleurs un moteur d'avion comprenant la nacelle telle que définie précédemment.

La nacelle et le moteur d'avion présentent les avantages précédemment exposés.

Le présent exposé concerne par ailleurs un procédé de fabrication d'un raidisseur courbe tel que défini précédemment comprenant une étape de couture dans laquelle le renfort fibreux est formé en cousant ensemble la pluralité de couches de fibres et la/les couches de fibres de renfort, une étape de drapage dans laquelle le renfort fibreux est disposé sur un moule de raidisseur, une étape d'imprégnation dans laquelle le renfort fibreux disposé sur le moule de raidisseur est imprégné de résine et une étape de polymérisation dans laquelle la résine imprégnée dans le renfort fibreux est solidifiée.

Un tel procédé permet d'obtenir un raidisseur présentant les avantages cités précédemment.

Les caractéristiques et avantages précités, ainsi que d'autres, apparaîtront à la lecture de la description détaillée qui suit, d'exemples de réalisation du dispositif et du procédé proposé. Cette description détaillée fait référence aux dessins annexés.

Brève description des dessins

Les dessins annexés sont schématiques et visent avant tout à illustrer les principes de l'exposé.

[Fig. 1A] La figure 1A représente un raidisseur courbe selon un premier mode de réalisation du raidisseur courbe.

[Fig. 1B] La figure 1B représente un raidisseur courbe selon un deuxième mode de réalisation du raidisseur courbe.

[Fig. 1C] figure 1C représente un raidisseur courbe selon un troisième mode de réalisation du raidisseur courbe.

[Fig. 2] La figure 2 représente une vue partielle d'un renfort fibreux selon un premier mode de réalisation, lors d'une étape de couture.

[Fig. 3] La figure 3 représente une vue partielle d'un renfort fibreux selon un deuxième mode de réalisation.

[Fig. 4A-4B] Les figures 4A et 4B représentent le renfort fibreux et le moule de raidisseur à différents instants du drapage.

[Fig. 5] La figure 5 représente schématiquement un fil de couture du renfort fibreux.

[Fig. 6] La figure 6 représente schématiquement les étapes du procédé de formation du raidisseur de la figure 2.

[Fig. 7] La figure 7 représente schématiquement un moteur d'avion comprenant une nacelle incluant un raidisseur selon le mode de réalisation.

Description des modes de réalisation

Afin de rendre plus concret l'exposé, un exemple de dispositif est décrit en détail ci-après, en référence aux dessins annexés. Il est rappelé que l'invention ne se limite pas à cet exemple.

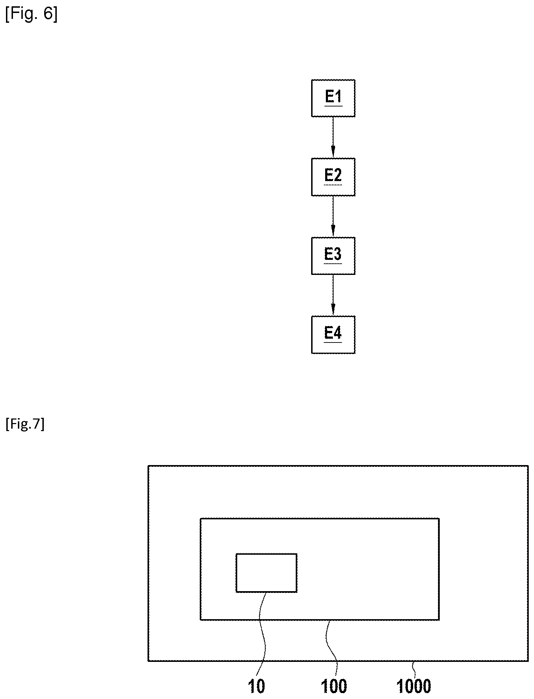

La figure 7 représente schématiquement un moteur d'avion 1000 comprenant une nacelle 100. La nacelle 100 comprend un capot incluant un raidisseur 10 courbe selon un premier mode de réalisation de l'invention.

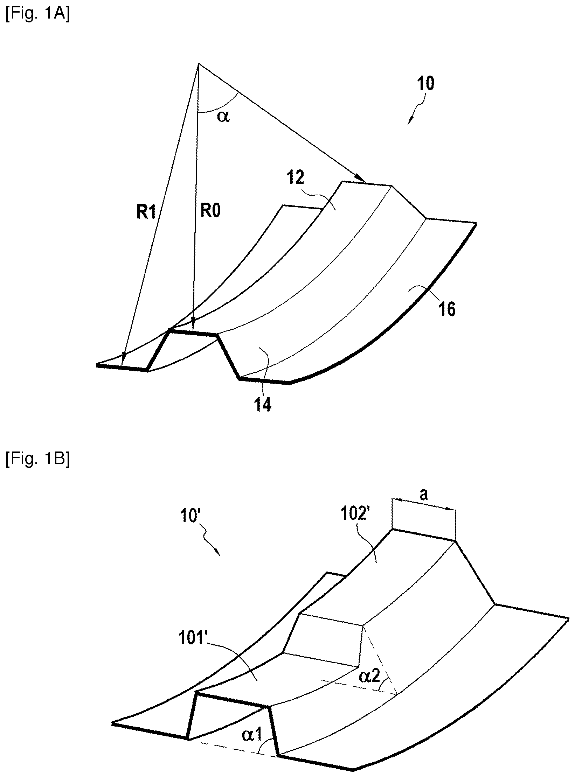

La figure 1A représente le raidisseur 10 courbe selon un premier mode de réalisation de l'invention. Le raidisseur 10 est composé d'un renfort fibreux 20 imprégné de résine et comprend une tête 12 en forme de portion d'anneau de rayon R0, deux pieds 16 en forme de portion d'anneau concentrique avec la tête 12, de rayon R1, et deux portions inclinées 14, chacune reliant l'un des pieds 16 à un côté latéral de la tête 12. Par ailleurs, le rayon R1 des deux pieds 16 est plus grand que le rayon R0 de la tête 12 lorsque la nacelle 100 présente une section circulaire. Ainsi, le raidisseur 10 s'étend sur un arc de cercle de mesure d'angle α (alpha). Cette forme du raidisseur 10 est appelée forme en omega. En particulier, on observe que la tête 12 et les portions inclinées 14 prises indépendamment ont une forme en trapèze. Dans certains exemples, l'angle α peut s'étendre jusqu'à 360 degrés.

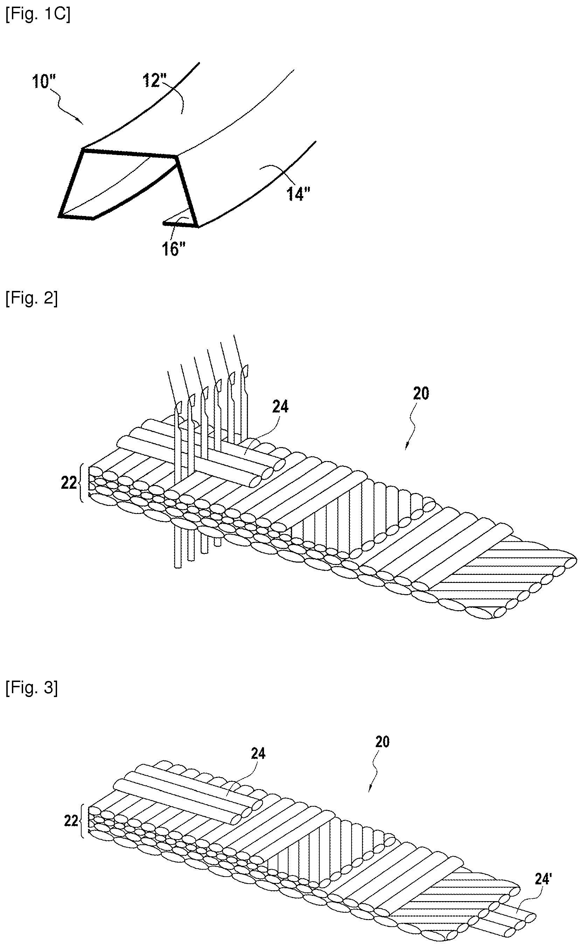

La figure 2 représente une vue partielle du renfort fibreux 20 selon un premier mode de réalisation. Le renfort fibreux 20 s'étend selon une direction de longueur, une direction de largeur, et une direction d'épaisseur. Ces trois directions définissent un repère orthogonal lorsque le renfort fibreux 20 est disposé sur une surface plane.

La dimension du renfort fibreux 20 selon la direction de longueur est plus grande que la dimension du renfort fibreux 20 selon la direction de largeur, et la dimension du renfort fibreux 20 selon la direction de l'épaisseur est la plus petite des dimensions du renfort fibreux 20. On comprend que la dimension du renfort fibreux 20 selon la direction de l'épaisseur est négligeable par rapport aux deux autres dimensions du renfort fibreux 20. En d'autres termes, le renfort fibreux 20 s'étend principalement sur deux dimensions.

Par ailleurs, une fois que le raidisseur est disposé dans une nacelle de turbomachine la direction d'épaisseur correspond à la direction du rayon de la turbomachine, la direction de longueur correspond à la direction circonférentielle de la nacelle et la direction de largeur correspond à la direction axiale de la nacelle.

Sur le renfort fibreux 20 on définit une portion centrale configurée pour former la tête 12 du raidisseur fabriqué. On définit également deux portions d'extrémités disposées de part et d'autre de la portion centrale configurées pour former les pieds 16, et deux portions de liaison reliant la portion centrale aux portions d'extrémités et configurées pour former les portions inclinées 14.

Comme représenté sur la figure 2, le renfort fibreux 20 comprend un empilement d'une pluralité de couches de fibres 22 empilées selon la direction d'épaisseur. Chaque couche de fibres 22 s'étend sur l'intégralité de la largeur du renfort fibreux 20. Par ailleurs, chaque couche de fibres 22 est composée d'une pluralité de fibres parallèles entre elles. Les fibres des couches de fibres 22 s'étendant selon une direction inclinée par rapport à la direction de longueur et les fibres de deux couches de fibres 22 consécutives selon la direction d'épaisseur présentent des directions inclinées l'une par rapport à l'autre.

Dans l'exemple de ce mode de réalisation et de manière non limitative, les fibres des couches de fibres 22 successives selon la direction d'épaisseur présentent des angles de -45° (ou 135°), 90°, 45°90°, 45°, 270° et 225° respectivement avec la direction de la longueur.

Le renfort fibreux 20 comprend par ailleurs une couche de fibres de renfort 24. La couche de fibres de renfort 24 est disposée sur la pluralité de couche de fibres 22, à une extrémité du renfort fibreux 20 selon la direction d'épaisseur. En d'autres termes, la couche de fibres de renfort 24 est disposée au-dessus des couches de fibres 22 au sens de la direction de l'épaisseur.

La couche de fibres de renfort 24 présente une pluralité de fibres parallèles entre elles s'étendant selon la direction de longueur, c'est-à-dire qu'elles présentent un angle de 0° avec la direction de la bngueur, la couche de fibres de renfort 24 s'étendant au moins sur la partie centrale, sur une largeur plus petite que la largeur du renfort fibreux 20.

Dans cet exemple et de manière non limitative, le renfort fibreux est composé de fibres de carbone NCF (Non-Crimp-Fabric). On comprend alors que les fibres des couches de fibres 22 et les fibres de la couche de fibres de renfort 24 sont des fibres de carbone. Cependant, des fibres de verre ou des fibres hybrides pourraient également être utilisées.

Comme cela est montré sur la figure 2, l'intégralité des couches de fibres 22 et la couche de fibres de renfort 24 sont cousues ensemble par des fils de couture s'étendant selon la direction de longueur. Par exemple, ces coutures sont des coutures de type tricot.

Par ailleurs, dans le mode de réalisation de la figure 2, à titre d'exemple non limitatif, une couture de type chainette est prévue aux extrémités du renfort fibreux 20 selon la direction de largeur. Les coutures chainette s'étendent également selon la direction de la longueur et délimitent la largeur du renfort fibreux 20.

La figure 3 représente une vue partielle d'un renfort fibreux selon un deuxième mode de réalisation. Dans ce mode de réalisation, le renfort fibreux 20 comprend au moins une couche de fibres de renfort supplémentaire 24' disposée dans l'empilement des couches de fibres 22. Dans le mode de réalisation de la figure 3, la couche de fibres de renfort supplémentaire 24' est identique à la couche de fibre de renfort 24. Elle comprend donc une pluralité de fibres orientées selon la direction de la longueur et s'étend sur la portion centrale du renfort fibreux 20. Par ailleurs, dans certains modes de réalisation, la couche de renfort 24 peut être prévue au-dessus, en dessous ou à l'intérieur de l'empilement des couches de fibres 22. De manière analogue, la couche de fibres de renfort supplémentaire 24' peut être prévue au-dessus, en dessous ou à l'intérieur de l'empilement des couches de fibres 22.

Dans certains autres exemples, la couche de fibre de renfort additionnelle 24' est de nature différente de la couche de fibres de renfort 24. Par exemple, la couche de fibre de renfort additionnelle 24' peut être composée de fibres de verre.

On comprend que dans ce mode de réalisation, le renfort fibreux 20 peut comprendre une pluralité de couches de fibres de renfort additionnelles 24' afin d'ajuster la raideur du raidisseur aux besoins de l'utilisateur. Par ailleurs, dans le même but, les épaisseurs de ou des couches de fibre de renfort additionnelles 24' peuvent être différentes entre elles et/ou différentes de l'épaisseur de la couche de fibres de renfort 24. De même, la nature des fibres des couches de fibres de renfort additionnelles 24' peuvent être de natures différentes entre elles et/ou différentes de la nature de la couche de fibres de renfort 24.

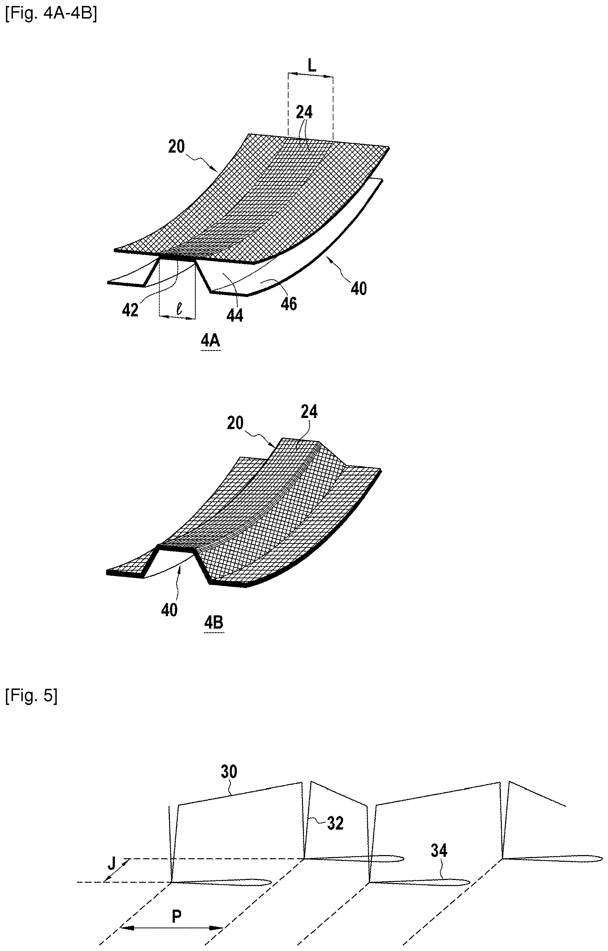

Les figures 4A et 4B représentent le renfort fibreux 20 qui est disposé sur un moule de raidisseur 40 à différents instants du drapage. La figure 4A représente le renfort fibreux 20 positionné pour être drapé sur le moule de raidisseur 40. La figure 4B représente le renfort fibreux 20 drapé sur le moule de raidisseur 40.

Le moule de raidisseur 40 présente une forme analogue à la forme du raidisseur et comprend une partie de tête 42, des parties de pied 46 et des parties de liaison 44 reliant les parties de pied 46 à la partie de tête 42.

Le renfort fibreux 20 est configuré pour coopérer avec le moule 40, c'est-à-dire pour épouser la forme du moule 40. Plus particulièrement, la partie centrale, les parties de liaison et les parties d'extrémité du renfort fibreux 20 sont configurées pour coopérer respectivement avec la partie de tête 42, les parties de liaison 44 et les parties de pied 46.

La partie de tête 42 s'étend sur une largeur l selon la direction de la largeur tandis que les couches de fibres de renfort 24 du renfort fibreux 20 s'étendent sur une largeur L selon la direction de la largeur, la largeur l de la partie de tête 42 étant inférieure ou égale à la largeur L de la couche de fibres de renfort 24. Ainsi, les couches de fibres de renfort 24 s'étendent sur la partie de tête 42 et, dans le présent exemple non limitatif, s'étendent partiellement sur les parties de liaison 44.

Par ailleurs, afin de faciliter le drapage illustré dans les figures 4A et 4B, la tension des fils de couture est plus faible dans les portions de liaison que la tension des fils de couture dans la portion centrale. Aussi, la répartition des points de coutures dans la portion centrale est plus dense que la répartition des points de coutures dans les portions de liaison.

En d'autres termes, le renfort fibreux 20 est plus facilement déformable et plus souple au niveau des portions de liaison et des portions d'extrémité qu'au niveau de la portion centrale.

A cet effet, la figure 5 représente schématiquement un fil de couture 30 du renfort fibreux 20. Le fil de couture 30 s'étend selon la direction de la longueur. Des points de couture présentant deux parties traversantes 32, aller et retour, et une boucle de couture 34 sont prévus de façon régulière. Les points de couture sont espacés d'un pas P dans le sens de la longueur et d'une jauge J dans le sens de la largeur.

La longueur totale de fil utilisée pour un point de couture, comprenant la longueur des parties traversantes 32 et la longueur de la boucle de couture 34, est variable en fonction de la tension que l'on souhaite appliquer au niveau du point de couture. En particulier, cette longueur peut présenter une sur-longueur par rapport à la longueur de fil d'un point de couture classique. Cette sur-longueur est calculée grâce à la formule suivante.

[Math. 1]

$$(1) : \frac{2P.R1}{R0} + \sqrt{(\frac{P.R1}{R0})^2 + J^2} - 2P - \sqrt{P^2 + J^2}$$

La figure 1B représente un raidisseur 10' selon un deuxième mode de réalisation de l'invention. Les caractéristiques identiques au premier mode de réalisation sont omises.

Dans ce mode de réalisation, le raidisseur 10' comprend deux portions 101' et 102' en forme de trapèze comme décrite précédemment pour raidisseur 10 de la figure 1A, selon le premier mode de réalisation. En particulier, la forme en trapèze comprend une petite base correspondant à la tête, une grande base et des côtés correspondant aux portions inclinées.

La forme en trapèze de la portion 101' présente un angle $\alpha$1 entre sa grande base et ses côtés tandis que la forme en trapèze de la portion 102' présente un angle $\alpha$2 entre sa grande base et ses côtés. Par ailleurs, la largeur a de la tête du raidisseur 10' du deuxième mode de réalisation est conservée sur toute sa longueur.

La configuration de la figure 1B permet d'adapter la forme du raidisseur 10' en fonction de contraintes structurelles et dimensionnelles pouvant être imposées par la nacelle 100.

La figure 1C représente un raidisseur 10" selon un troisième mode de réalisation. Les caractéristiques identiques au premier mode de réalisation sont omises.

Dans le troisième mode de réalisation, le raidisseur 10" comprend une tête 12", des parties de liaison 14" et des pieds 16". Dans ce mode de réalisation, les pieds 16" s'étendent vers l'intérieur du raidisseur 10" selon la direction de la largeur. En d'autres termes, les pieds 16" s'étendent en dessous de la tête 12" au sens de la direction de l'épaisseur.

La figure 6 représente schématiquement les étapes du procédé de formation du raidisseur selon le premier mode de réalisation. Ce procédé s'applique également au deuxième et au troisième mode de réalisation. Le procédé de fabrication du raidisseur comprend successivement une étape de couture E1, une étape de drapage E2, une étape d'imprégnation E3 et une étape de polymérisation E4.

Dans l'étape de couture E1, les couches de fibres 22 et les couches de fibres de renfort 24 sont cousues ensemble pour former le renfort fibreux 20. Comme expliqué précédemment, les coutures sont de type tricot. Par ailleurs, durant cette opération, les coutures de type chainette sont cousues aux extrémités selon la direction de la largeur du renfort fibreux 20 formé.

Dans l'étape de drapage E2, le renfort fibreux 20 est drapé sur le moule de raidisseur 40 afin que le renfort fibreux 20 prenne la forme d'un raidisseur courbe. Le moule 40 peut être de type mâle comme illustré sur la figure 4A, ou de type femelle. Un moule de raidisseur 40 de type femelle correspond à un moule dont la forme est complémentaire à la forme d'un moule de raidisseur 40 mâle. Le moule de raidisseur 40 de type mâle est de forme globalement convexe tandis que le moule de raidisseur de type femelle est de forme globalement concave.

Dans le deuxième et le troisième mode de réalisation, des moules appropriés sont utilisés lors de l'étape de drapage E2.

Dans l'étape d'imprégnation E3, le renfort fibreux 20 disposé sur le moule 40 est imprégné de résine. Cette imprégnation peut être effectuée par infusion de résine dans un environnement sous-pressurisée (pression inférieure à 1 bar), à l'aide d'un moule rigide et d'une membrane souple ou par moulage par transfert de résine (aussi appelé RTM, conformément au sigle anglais pour Resin Transfer Moulding) dans un environnement sur-pressurisé (pression supérieure à 1 bar), à l'aide de deux moules rigides. Dans cet exemple, la résine est de faible viscosité.

Dans l'étape de polymérisation E4, le renfort fibreux 20 disposé dans le moule 40 et imprégné de résine est polymérisé dans un four. Dans cet exemple non limitatif, le renfort fibreux est maintenu à 120°C pen-dant 5 heures.

Enfin, un raidisseur 10 est obtenu une fois qu'il a été démoulé du moule de raidisseur 40.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/-mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Raidisseur (10) courbe pour capot de turbomachine composé d'un renfort fibreux (20) imprégné de résine,

le raidisseur(10) comprenant une tête (12) en forme de portion d'anneau, deux pieds (16) en forme de portion d'anneau concentrique avec la tête (12) et présentant un rayon plus grand qu'un rayon de la tête (12), et deux portions inclinées (14), chacune reliant l'un des pieds (16) à un côté latéral de la tête (12),
le renfort fibreux (20) s'étendant selon une direction de longueur, une direction de largeur, et une direction d'épaisseur,
la dimension du renfort fibreux (20) selon la direction de longueur étant plus grande que la dimension du renfort fibreux (20) selon la direction de largeur, et la dimension du renfort fibreux (20) selon la direction de l'épaisseur étant la plus petite des dimensions du renfort fibreux (20),
le renfort fibreux (20) présentant une portion centrale configurée pour former la tête (12),
deux portions d'extrémités disposées de part et d'autre de la portion centrale et configurées pour former les pieds (16),
deux portions de liaison reliant la portion centrale aux portions d'extrémités et configurées pour former les portions inclinées (14),
le renfort fibreux (20) comprenant un empilement d'une pluralité de couches de fibres (22) empilées selon la direction d'épaisseur et s'étendant sur l'intégralité de la largeur du renfort fibreux (20),
**caractérisé en ce que** chaque couche de fibres (22) présente une pluralité de fibres parallèles entre elles s'étendant selon une direction inclinée par rapport à la direction de longueur,
les fibres de deux couches de fibres (22) consécutives selon la direction d'épaisseur présentent des directions inclinées l'une par rapport à l'autre, et les couches de fibres (22) sont cousues entre elles par des fils de couture s'étendant selon la direction de longueur, et
le renfort fibreux (20) comprend une couche de fibres de renfort (24) cousue avec les couches de fibres (22) par les fils de couture présentant une pluralité de fibres parallèles entre elles s'étendant selon la direction de longueur, la couche de fibres de renfort (24) s'étendant au moins sur la partie centrale, sur une largeur plus petite que la largeur du renfort fibreux (20).

2. Raidisseur (10) selon la revendication 1 dans laquelle la couche de fibres de renfort (24) s'étend sur une partie des portions de liaison.

3. Raidisseur selon l'une des revendications 1 ou 2, dans lequel la couche de fibres de renfort (24) est disposée sur la pluralité de couche de fibres (22) à une extrémité du renfort fibreux (20) selon la direction d'épaisseur.

4. Raidisseur (10) selon l'une des revendications 1 à 3, comprenant au moins une couche de fibres de renfort additionnelle (24') disposée dans l'empilement des couches de fibres (22).

5. Raidisseur selon l'une des revendications 1 à 4, comprenant des coutures chainette disposées aux extrémités du renfort fibreux (20) selon la direction de largeur.

6. Raidisseur (10) selon l'une des revendications 1 à 5, dans lequel les couches de fibres (22) et les couches de fibres de renfort (24,24') sont cousues entre elles par des coutures de type tricot.

7. Raidisseur (10) selon l'une des revendications 1 à 6, dans lequel la tension des fils de couture (30) est plus faible dans les portions de liaison que la tension des fils de couture (30) dans la portion centrale.

8. Raidisseur (10) selon l'une des revendications 1 à 7, dans lequel la répartition des points de coutures (32) dans la portion centrale est plus dense que la répartition des points de coutures (32) dans les portions de liaison.

9. Raidisseur selon l'une des revendications 1 à 8, dans lequel les fils de couture (30) cousus sur les portions d'extrémité et les portions de liaison présentent une sur-longueur.

10. Nacelle (100) comprenant un raidisseur (10) selon l'une des revendications 1 à 9.

11. Moteur d'avion (1000) comprenant une nacelle (100) selon la revendication 10.

12. Procédé de fabrication d'un raidisseur (10) courbe selon l'une des revendications 1 à 9 comprenant

une étape de couture (E1) dans laquelle le renfort fibreux (20) est formé en cousant ensemble la pluralité de couches de fibres (22) et la/les couches de fibres de renfort (24),
une étape de drapage (E2) dans laquelle le renfort fibreux (20) est disposé sur un moule de raidisseur (40),
une étape d'imprégnation (E3) dans laquelle le renfort fibreux (20) disposé sur le moule de raidisseur (40) est imprégné de résine,
une étape de polymérisation (E4) dans laquelle la résine imprégnée dans le renfort fibreux (20) est solidifiée.

**Patentansprüche**

1. Gekrümmte Versteifung (10) für eine Strömungsmaschinenhaube, die aus einer harzimprägnierten Faserverstärkung (20) besteht,

   die Versteifung (10) umfassend einen Kopf (12) in Form eines ringförmigen Abschnitts, zwei Füße (16) in Form eines ringförmigen Abschnitts, der konzentrisch zu dem Kopf (12) ist, und der einen Radius aufweist, der größer ist als ein Radius des Kopfs (12), und zwei geneigte Abschnitte (14), die jeweils einen der Füße (16) mit einer seitlichen Seite des Kopfs (12) verbinden,
   wobei sich die Faserverstärkung (20) in einer Längenrichtung, einer Breitenrichtung und einer Stärkenrichtung erstreckt,
   wobei die Abmessung der Faserverstärkung (20) in der Längenrichtung größer ist als die Abmessung der Faserverstärkung (20) in der Breitenrichtung, und die Abmessung der Faserverstärkung (20) in der Stärkenrichtung die kleinste der Abmessungen der Faserverstärkung (20) ist,
   wobei die Faserverstärkung (20) einen mittleren Abschnitt, der konfiguriert ist, um den Kopf (12) zu bilden,
   zwei Endabschnitte, die auf beiden Seiten des mittleren Abschnitts angeordnet und konfiguriert sind, um die Füße (16) zu bilden,
   zwei Verbindungsabschnitte, die den mittleren Abschnitt mit den Endabschnitten verbinden und konfiguriert sind, um die geneigten Abschnitte (14) zu bilden, aufweist,
   die Faserverstärkung (20) umfassend einen Stapel aus einer Vielzahl von Faserlagen (22), die in der Stärkenrichtung gestapelt sind und sich über die gesamte Breite der Faserverstärkung (20) erstrecken,
   **dadurch gekennzeichnet, dass** jede Faserlage (22) eine Vielzahl von zueinander parallelen Fasern aufweist, die sich in einer Richtung erstrecken, die in Bezug auf die Längenrichtung geneigt ist,
   die Fasern von zwei in der Stärkenrichtung aufeinanderfolgenden Faserlagen (22) zueinander geneigte Richtungen aufweisen, und die Faserlagen (22) durch Nähfäden, die sich in der Längenrichtung erstrecken, miteinander vernäht sind, und

   die Faserverstärkung (20) eine Verstärkungsfaserlage (24) umfasst, die durch die Nähfäden, die eine Vielzahl von zueinander parallelen Fasern aufweisen, die sich in der Längenrichtung erstrecken, mit den Faserlagen (22) vernäht ist, sich die Verstärkungsfaserlage (24) zumindest über den mittleren Teil über eine Breite erstreckt, die kleiner ist als die Breite der Faserverstärkung (20).

2. Versteifung (10) nach Anspruch 1, wobei sich die Verstärkungsfaserlage (24) über einen Teil der Verbindungsabschnitte erstreckt.

3. Versteifung nach einem der Ansprüche 1 oder 2, wobei die Verstärkungsfaserlage (24) an einem Ende der Faserverstärkung (20) in der Stärkenrichtung auf der Vielzahl von Faserlagen (22) angeordnet ist.

4. Versteifung (10) nach einem der Ansprüche 1 bis 3, umfassend mindestens eine zusätzliche Verstärkungsfaserlage (24'), die in dem Stapel der Faserlagen (22) angeordnet ist.

5. Versteifung nach einem der Ansprüche 1 bis 4, umfassend Chainette-Nähte, die an den Enden der Faserverstärkung (20) in der Breitenrichtung angeordnet sind.

6. Versteifung (10) nach einem der Ansprüche 1 bis 5, wobei die Faserlagen (22) und die Verstärkungsfaserlagen (24, 24') durch strickartige Nähte untereinander vernäht sind.

7. Versteifung (10) nach einem der Ansprüche 1 bis 6, wobei die Spannung der Nähfäden (30) in den Verbindungsabschnitten geringer ist als die Spannung der Nähfäden (30) in dem mittleren Abschnitt.

8. Versteifung (10) nach einem der Ansprüche 1 bis 7, wobei die Verteilung der Nähstiche (32) in dem mittleren Abschnitt dichter ist als die Verteilung der Nähstiche (32) in den Verbindungsabschnitten.

9. Versteifung nach einem der Ansprüche 1 bis 8, wobei die Nähfäden (30), die an den Endabschnitten und den Verbindungsabschnitten genäht sind, eine Überlänge aufweisen.

10. Gondel (100), umfassend eine Versteifung (10) nach einem der Ansprüche 1 bis 9.

11. Flugzeugtriebwerk (1000), umfassend eine Gondel (100) nach Anspruch 10.

12. Verfahren zur Herstellung einer gekrümmten Versteifung (10) nach einem der Ansprüche 1 bis 9, umfassend

einen Nähschritt (E1), wobei die Faserverstärkung (20) durch Vernähen der Vielzahl von Faserlagen (22) und der/den Verstärkungsfaserlage(en) (24) gebildet ist,

einen Drapierschritt (E2), wobei die Faserverstärkung (20) auf einer Versteifungsform (40) angeordnet wird,

einen Imprägnierungsschritt (E3), wobei die Faserverstärkung (20), die auf der Versteifungsform (40) angeordnet ist, mit Harz imprägniert ist,

einen Polymerisationsschritt (E4), wobei das Harz, das in die Faserverstärkung (20) imprägniert ist, verfestigt wird.

## Claims

1. A curved stiffener(10) for a turbomachine cowl composed of a resin- impregnated fibrous reinforcement (20),

the stiffener (10) comprising a ring portion shaped head (12), two ring portion shaped feet (16) concentric with the head (12) and having a radius greater than a radius of the head (12), and two inclined portions (14), each connecting one of the feet (16) to a lateral side of the head (12), the fibrous reinforcement (20) extending along a length direction, a width direction and a thickness direction,

the dimension of the fibrous reinforcement (20) along the length direction being greater than the dimension of the fibrous reinforcement (20) along the width direction, and the dimension of the fibrous reinforcement (20) along the thickness direction being the smallest of the dimensions of the fibrous reinforcement (20),

the fibrous reinforcement (20) having a central portion configured to form the head (12),

two end portions disposed on either side of the central portion and configured to form the feet (16),

two connecting portions connecting the central portion to the end portions and configured to form the inclined portions (14),

the fibrous reinforcement (20) comprising a stack of a plurality of layers of fibers (22) stacked along the thickness direction and extending on the entire width of the fibrous reinforcement (20),

**characterized in that** each layer of fibers (22) has a plurality of fibers parallel to each other extending along a direction inclined relative to the length direction,

the fibers of two consecutive layers of fibers (22) along the thickness direction have directions inclined relative to each other, and

the layers of fibers (22) are sewn together by sewing threads extending along the length direction,

wherein the fibrous reinforcement (20) comprises a layer of reinforcing fibers (24) sewn with the layers of fibers (22) by the sewing threads having a plurality of fibers parallel to each other extending along the length direction, the layer of reinforcing fibers (24) extending at least on the central part, over a width smaller than the width of the fibrous reinforcement (20).

2. The stiffener (10) according to claim 1 wherein the layer of reinforcing fibers (24) extends on part of the connecting portions.

3. The stiffener according to any of claims 1 or 2, wherein the layer of reinforcing fibers (24) is disposed on the plurality of layers of fibers (22) at one end of the fibrous reinforcement (20) along the thickness direction.

4. The stiffener (10) according to any of claims 1 to 3, comprising at least one additional layer of reinforcing fibers (24') disposed in the stack of the layers of fibers (22).

5. The stiffener according to any of claims 1 to 4, comprising chain stitch seams disposed at the ends of the fibrous reinforcement (20) along the width direction.

6. The stiffener (10) according to any of claims 1 to 5, wherein the layers of fibers (22) and the layers of reinforcing fibers (24, 24') are sewn together by knit-type stitches.

7. The stiffener (10) according to any of claims 1 to 6, wherein the tension of the sewing threads (30) is lower in the connecting portions than the tension of the sewing threads (30) in the central portion.

8. The stiffener (10) according to any of claims 1 to 7, wherein the distribution of the sewing stitches (32) in the central portion is denser than the distribution of the sewing stitches (32) in the connecting portions.

9. The stiffener according to any of claims 1 to 8, wherein the sewing threads (30) sewn on the end portions and the connecting portions have an excess length.

10. A nacelle (100) comprising a stiffener (10) according to any of claims 1 to 9.

11. An aircraft engine (1000) comprising a nacelle (100) according to claim 10.

12. A method for manufacturing a curved stiffener (10) according to any of claims 1 to 9 comprising:

a sewing step (E1) in which the fibrous reinforcement (20) is formed by sewing together the plurality of layers of fibers (22) and the layer(s) of reinforcing fibers (24),

a draping step (E2) in which the fibrous reinforcement (20) is disposed on a stiffener mold (40),

an impregnation step (E3) in which the fibrous reinforcement (20) disposed on the stiffener mold (40) is impregnated with resin,

a polymerization step (E4) in which the resin impregnated in the fibrous reinforcement (20) is solidified.

[Fig. 1A]

[Fig. 1B]

EP 4 323 179 B1

[Fig. 1C]

10"    12"

14"

16"

[Fig. 2]

24

20

22

[Fig. 3]

24    20

22

24'

12

[Fig. 4A-4B]

L

24

20

40

42  ℓ  44  46

4A

24

20

40

4B

[Fig. 5]

30

32

34

J

P

[Fig. 6]

[Fig.7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2774854 A